# EUROPÄISCHE PATENTSCHRIFT

(11) **EP 3 351 679 B1**
(45) Veröffentlichungstag und Bekanntmachung des Hinweises auf die Patenterteilung: **13.07.2022**
(21) Anmeldenummer: 18152256.6
(22) Anmeldetag: 18.01.2018
(51) Int. Cl.: D06N 3/00, B32B 11/04, B32B 11/08, B32B 11/10, D06N 5/00

(54) **BITUMENKOMPOSIT MIT SCHUTZ VOR PFLANZENWURZELN**
BITUMEN COMPOSITE WITH PROTECTION AGAINST PLANT ROOTS
COMPOSITE DE BITUME POURVU DE PROTECTION CONTRE LES RACINES DE PLANTES

(30) Priorität: 19.01.2017 EP 17152107
(43) Veröffentlichungstag der Anmeldung: 25.07.2018
(73) Patentinhaber: swisspor Management AG, 6312 Steinhausen (CH)
(72) Erfinder: Simmler, Hans, 8630 Rüti (CH)
(74) Vertreter: Koelliker, Robert

(56) Entgegenhaltungen:
- CN-U- 201 486 050
- CN-U- 203 429 911
- CN-Y- 201 343 832
- DE-A1- 19 915 957

## Beschreibung

Die vorliegende Erfindung betrifft einen Bitumenkomposit mit Schutz vor Pflanzenwurzeln, ein Verfahren zur Herstellung des Bitumenkomposits, ein Verfahren zum Abdichten von Bauwerksflächen umfassend den Bitumenkomposit, abgedichtete Bauwerksflächen erhältlich nach dem Verfahren, sowie die Verwendung des Bitumenkomposits zum Abdichten von Bauwerksflächen sowie der abgedichteten Bauwerksfläche.

Bauwerksflächen, beispielsweise Gebäudeflächen wie Flachdächer von Gebäuden, Überdachungen und Brücken von Strassen und Eisenbahn, sowie Schwimmbäder, müssen gegen eindringendes Oberflächenwasser geschützt werden, um möglichen Bauschäden vorzubeugen. Als ein geeigneter Schutz haben sich Bitumenkomposite, insbesondere in Form von Bitumenbahnen, erwiesen. Solche Bitumenkomposite wie Bitumenbahnen können kosteneffizient hergestellt und auf abzudichtende Bauwerksflächen verlegt werden.

Werden Bauwerksflächen begrünt, ist es zudem äusserst wichtig, dass diese auch gegen Pflanzenwurzeln geschützt werden. Denn trotz Abdichtung können früher oder später Pflanzenwurzeln die Abdichtung durchdringen, die Abdichtung zerstören und Schäden am Bauwerk verursachen. Aus diesem Grund wurden Bitumenbahnen vorgeschlagen, die ein Wurzelschutz-Additiv, wie beispielsweise ein Biozid, insbesondere ein Herbizid, enthalten. Allerdings zeigte sich, dass solche Wurzelschutz-Additive mit der Zeit herausgewaschen werden, was die Wurzelschutzfunktion deutlich reduziert. Zudem gelangt das ausgewaschene Wurzelschutz-Additiv in den Boden und/oder in Gewässer, was nicht nur aufgrund der immer strengeren gesetzlichen Anforderungen unerwünscht ist.

Um diesen Nachteil zu beseitigen, schlägt die CH 698 994 B1 eine Bitumenbahn vor, die eine einzige, durchgehende Bitumenschicht mit Wurzelschutz-Additiv umfasst, wobei auf der gebäudeabgewandten Seite der applizierten Bitumenschicht eine durchgehende wasserdichte, nichtwurzelfeste Dichtschicht aus beispielsweise PP oder PE angeordnet ist. Die Bitumenschicht kann zudem optional noch auf der gebäudezugewandten Seite der applizierten Bitumenschicht eine weitere Trennfolie und innerhalb der Bitumenschicht ein Polyestervlies aufweisen. Nachteilig daran ist jedoch, dass die mit Folie beschichtete Oberfläche der Bitumenbahn nur sehr schlecht mit feinen Mineralpartikeln wie Talk, Sand und/oder Schieferplättchen beschichtet werden kann. Eine solche Beschichtung ist jedoch als UV-, Wetter- und/oder Begehbarkeitsschutz hilfreich. Auch besteht die Gefahr, dass die Folie an einigen Orten beispielsweise durch scharfe Steine aufgeschnitten wird, wodurch an diesen Stellen die Folie keinen Schutz mehr bietet. Nicht zu vernachlässigen sind insbesondere auch die Randzonen zwischen zwei verlegten Bitumenbahnen. Denn diese bilden eine Schwachstelle, durch welche das Wurzelschutz-Additiv schneller ausgewaschen wird und Pflanzenwurzeln in den Untergrund eindringen können.

Die CN 203 429 911 U beschreibt ein selbstklebendes, wasserdichtes und vielschichtiges Rollenmaterial, wobei das Rollenmaterial insbesondere ein wurzeleindringungsbeständiges wasserdichtes Rollenmaterial aus PVC (Polyvinylchlorid) mit Schichtstruktur ist. Die Schichtstruktur umfasst i) eine obere Isolationsschicht, ii) eine obere selbstklebende und durchwurzelungsresistente modifizierte Asphalt-Schicht, iii) eine obere Barriere-Schicht, iv) eine wasserdichte PVC Schicht, v) eine untere Barriere-Schicht, vi) eine untere selbstklebende wurzelpenetrationsresistente modifizierten Asphalt-Schicht, und vii) eine untere Isolierschicht. Da die modifizierten Asphalt-Schichten wurzelpenetrationsbeständig ausgestaltet sind, kann die Wachstumsrichtung eines Pflanzenwurzelsystems geändert werden, wodurch das Wurzelsystem wirksam daran gehindert wird in die wasserdichte Schicht einzudringen. Das vielschichtige und komplex aufgebaute Rollenmaterial ist entsprechend schwierig herstellbar. Die obere und untere Barriere-Schicht sind wiederum von 2 weiteren Schichten überdeckt. Wurzelschutz-Additive sind nicht erwähnt.

Die CN 201 486 050 U beschreibt ein wasserfestes aufgerolltes Material umfassend eine modifizierte wasserfeste Schicht aus Asphalt umfassend ein Wurzel-Abwehrmittel, eine Schicht aus Metallfolie, wobei diese eine Schicht aus Kupfer darstellt, sowie eine Schicht aus Polyestervlies, die mit modifiziertem Asphalt präimprägniert ist. Eine bevorzugte Ausführungsform des Materials weist einen komplexen Aufbau auf bestehend aus i) PE-Geflecht, ii) Asphalt-Schicht, iii) Metall-Folie, iv) Polyestervlies, v) Asphalt-Schicht und vi) PE-Geflecht. Dabei wird nur eine Art von Asphalt-Schicht eingesetzt und das Wurzel-Abwehrmittel ist nicht näher spezifiziert. Nachteilig ist - neben dem komplexen Aufbau - insbesondere, dass nach dem Verlegen des Materials eine Schicht aus Asphalt mit dem Wurzel-Abwehrmittel den Witterungseinflüssen ausgesetzt ist, da Wasser durch das PE-Geflecht gelangen kann. Somit kann das Wurzel-Abwehrmittel aus der Asphalt-Schicht ausgewaschen werden und in die Umwelt und somit u.a. in Gewässer und Böden gelangt.

Die DE 199 15 957 A1 schlägt ein Dachabdeckungsmaterial vor für begrünbare Dächer, insbesondere in Form von armierten Bitumen- oder Kunststoffdachbahnen oder als Flüssigkunststoff für Beschichtungen, welche in den Kunststoff oder in das Bitumen eingearbeitetes Kupferpulver enthalten, wobei Kupfer eine phytotoxische Wirkung zur Reduktion des Wurzelwachstums von Pflanzen zugeschrieben wird. Das pulverförmige Kupferpulver kann in die Vliesträgereinlage einer Dachabdeckungsbahn oder in die obere Bitumendeckschicht eingearbeitet werden. Das eingearbeitete Kupferpulver wird jedoch mit der Zeit ausgewaschen und gelangt so in die Umwelt, und somit u.a. in Gewässer und Böden. Da Kupfer biologisch nicht abbaubar ist, wird es dort akkumuliert. Dieser ungewünschte Kupfereintrag gilt es jedoch zu vermeiden, weshalb Kupfer ein ungeeignetes Mittel zur Verringerung resp. zur Vermeidung des Wurzelwachstums bei Dachabdeckungsmaterialien darstellt. Die eingesetzte Vliesträgereinlage aus Kunststoff wird zur Verstärkung des Dachabdeckungsmaterials eingesetzt und bietet als solche keinen Schutz vor einer Penetration von Pflanzenwurzeln.

Aufgabe der vorliegenden Erfindung ist daher einen Bitumenkomposit bereitzustellen, welche das Ein- und Durchdringen von Pflanzenwurzeln im Wesentlichen verhindert, wobei ein allfällig eingesetztes Wurzelschutz-Additiv nicht oder nur äusserst langsam ausgewaschen werden soll. Die Oberflächen des Bitumenkomposits sollen zudem einfach mit feinen Mineralpartikeln beschichtbar sein, um einen erhöhten UV-, Wetter- und Begehbarkeitsschutz zu erhalten.

Diese Aufgabe konnte überraschenderweise gelöst werden mit einem Bitumenkomposit (1) mit Schutz vor Pflanzenwurzeln, umfassend eine untere Bitumenschicht (2), eine obere Sperrschicht (3) und gegebenenfalls eine innerhalb der Bitumenschicht (2) angeordnete Verstärkungsschicht (4), dadurch gekennzeichnet, dass die Sperrschicht (3)
i) eine Sperrschicht (3a) darstellt umfassend mindestens ein Hydrophobierungsmittel (5) und gegebenenfalls eine Bitumenschicht ohne Wurzelschutzadditiv (9), wobei die Bitumenschicht (2) mindestens ein Wurzelschutz-Additiv umfasst, wobei das Hydrophobierungsmittel (5) der Sperrschicht (3a) ein Alkoxysilan, Alkylalkoxysilan, Alkoxysiloxan, Alkylalkoxysiloxan, Alkylpolysiloxan, Siliconharz und/oder Alkalisiliconat darstellt,
ii) eine Sperrschicht (3b) darstellt bestehend aus einer Trennfolie (6) und einer Bitumenschicht ohne Wurzelschutz-Additiv (9), wobei die Bitumenschicht (2) mindestens ein Wurzelschutz-Additiv umfasst, und die Trennfolie (6) im Wesentlichen zwischen der Bitumenschicht (2) und der Bitumenschicht (9) angeordnet ist, oder
iii) eine Sperrschicht (3c) darstellt umfassend mindestens ein wurzelfestes Geotextil (7) und gegebenenfalls eine Bitumenschicht ohne Wurzelschutz-Additiv (9), wobei die Bitumenschicht (2) bevorzugt mindestens ein Wurzelschutz-Additiv umfasst,
wobei das Wurzelschutz-Additiv ein organisches Wurzelschutz-Additiv ist und die Sperrschicht (3) als Oberfläche des Bitumenkomposits (1) ausgebildet ist.

Beansprucht wird auch ein Verfahren zur Herstellung des erfindungsgemässen Bitumenkomposits (1), wobei
i) die Bitumenschicht (2) und die Sperrschicht (3) miteinander in Kontakt gebracht werden, oder
ii) die Bitumenschicht (2) und das Hydrophobierungsmittel (5), die Trennfolie (6) oder das Geotextil (7) miteinander in Kontakt gebracht werden und anschliessend die Bitumenschicht (9) auf das Hydrophobierungsmittel (5), die Trennfolie (6) und/oder das Geotextil (7) angebracht wird, oder
iii) die Bitumenschicht (2) und das Hydrophobierungsmittel (5), die Trennfolie (6) oder das Geotextil (7) und die Bitumenschicht (9) so miteinander in Kontakt gebracht werden, dass das Hydrophobierungsmittel (5), die Trennfolie (6) oder das Geotextil (7) im Wesentlichen zwischen der Bitumenschicht (2) und der Bitumenschicht (9) angeordnet wird.

Zudem wird auch ein Verfahren zum Abdichten von Bauwerksflächen (10) umfassend den erfindungsgemässen Bitumenkomposit (1) beansprucht, wobei der Bitumenkomposit (1)
i) werkseitig hergestellt wird und so eine Bitumenbahn (1a) darstellt, wobei die Bitumenbahn (1a) in einem nachfolgenden Schritt auf eine Bauwerksfläche (10) aufgetragen wird, oder
ii) direkt auf der Bauwerksfläche (10) hergestellt wird, indem in einem ersten Schritt die Bitumenschicht (2) auf die Bauwerksfläche (10) verlegt wird und nachfolgend mindestens eine Sperrschicht (3a, 3b, 3c) umfassend das Hydrophobierungsmittel (5), die Trennfolie (6) und/oder das Geotextil (7) auf die Bitumenschicht (2) aufgetragen und anschliessend gegebenenfalls mit der Bitumenschicht (9) überdeckt wird.

Beansprucht werden auch abgedichtete Bauwerksflächen erhältlich nach dem erfindungsgemässen Verfahren.

Auch wird die Verwendung des erfindungsgemässen und/oder erfindungsgemäss hergestellten Bitumenkomposits (1) beansprucht zum Abdichten von Bauwerksflächen (10), insbesondere Gebäudedächer, von Innen- und Aussenbereichen von Tunnels, von Überdachungen, insbesondere Überdachungen von Strassen und/oder Eisenbahnlinien, von Brücken und/oder Schwimmbädern.

Zudem wird auch die Verwendung der abgedichteten Bauwerksflächen und der nach dem erfindungsgemässen Verfahren abgedichteten Bauwerksflächen beansprucht, wobei diese insbesondere bei Gebäudedächer, Innen- und Aussenbereichen von Tunnels, Überdachungen, insbesondere Überdachungen von Strassen und/oder Eisenbahnlinien, sowie bei Brücken und/oder Schwimmbäder verwendet werden.

Der erfindungsgemässe Bitumenkomposit (1), der erfindungsgemäss hergestellte Bitumenkomposit (1), die erfindungsgemäss abgedichtete Bauwerksfläche sowie die erfindungsgemässe Verwendung des Bitumenkomposits (1) und der abgedichteten Bauwerksfläche weisen viele Vorteile auf. So wurde überraschenderweise gefunden, dass der erfindungsgemässe Bitumenkomposit (1) und die nach dem erfindungsgemässen Verfahren mit erfindungsgemässem Bitumenkomposit (1) hergestellte abgedichtete Bauwerksfläche aufgrund der Sperrschicht (3) das Ein- und Durchdringen von Pflanzenwurzeln im Wesentlichen verhindert. Wird zudem - beispielsweise in der Bitumenschicht (2) - ein Wurzelschutz-Additiv eingesetzt, weist der Bitumenkomposit (1) neben der Sperrschicht (3) eine weitere Schutzschicht gegen das Ein- und Durchdringen von Pflanzenwurzeln auf. Wird nun der Bitumenkomposit (1) auf die Bauwerksfläche (10) so verlegt, dass die Bitumenschicht (2) zur Bauwerksfläche (10) hin und die Sperrschicht (3) auf der zur Bauwerkseite (10) gegenüberliegenden Seite angeordnet ist, wird ein Auswaschen des Wurzelschutz-Additivs aus der Bitumenschicht (2) - sofern vorhanden - durch die Anwesenheit der Sperrschicht (3) zusätzlich erschwert, wenn nicht sogar verunmöglicht. Auch ist es möglich, die Oberflächen des Bitumenkomposits (1) auf einfache Art und Weise mit feinen Mineralpartikeln zu beschichten, um einen erhöhten UV-, Wetter- und Begehbarkeitsschutz zu erhalten.

Das erfindungsgemässe Verfahren zur Herstellung des Bitumenkomposits (1) erlaubt zudem verschiedene, rationelle Herstellungsweisen des erfindungsgemässen Bitumenkomposits (1). So kann der Bitumenkomposit (1) sowohl werkseitig - beispielsweise in Form einer Bitumenbahn (1a) - oder Bauseitig - beispielsweise in Form einer Bitumenschichtkörpers (1b) - hergestellt werden.

Mit dem erfindungsgemässen Verfahren zum Abdichten von Bauwerksflächen (10) umfassend den erfindungsgemässen Bitumenkomposit (1) können Bauwerksflächen (10) mit werkseitig hergestellten Bitumenkomposits (1) - beispielsweise in Form einer Bitumenbahn (1a) - auf einfach Art und Weise effizient verlegt und abgedichtet werden. Wird hingegen der erfindungsgemässe Bitumenkomposit (1) direkt auf der Bauwerksfläche (10) hergestellt, können überraschenderweisen Randzonen zwischen einzelnen Bitumenbahnen (1a) reduziert oder ganz verhindert werden. Dadurch wird das Eindringen von Pflanzenwurzeln insbesondere in den Bereichen zwischen zwei nebeneinander angeordneten Bitumenbahnen (1a) verhindert oder zumindest deutlich reduziert.

Durch die erfindungsgemässe Anordnung des Bitumenkomposits (1) auf der abgedichteten Bauwerksfläche (10) wird überraschenderweise auch das Auswaschen des - bevorzugt vorhandenen - Wurzelschutz-Additivs drastisch reduziert. Dadurch verlängert sich die Wirkdauer des Wurzelschutz-Additivs, d.h. der erfindungsgemässe Bitumenkomposit (1) und die nach erfindungsgemässem Verfahren erhaltenen abgedichteten Bauwerksflächen (10) weisen über einen wesentlich längeren Zeitraum einen sehr hohen Wurzelschutz auf - und dies bei gleichbleibender Konzentration des Wurzelschutz-Additivs.

### Der Bitumenkomposit (1)

Der erfindungsgemässe Bitumenkomposit (1) mit Schutz vor Pflanzenwurzeln umfasst eine untere Bitumenschicht (2), eine obere Sperrschicht (3) und gegebenenfalls eine Verstärkungsschicht (4). Dabei sind die untere Bitumenschicht (2) und eine obere Sperrschicht (3) entsprechend gekennzeichnet, beispielsweise durch Beschriftung oder durch Farbe mit Hinweis zur korrekten Anwendung, damit keine Verwechslung entstehen kann. Denn die Bitumenschicht (2) umfasst - zumindest bevorzugt - mindestens ein Wurzelschutz-Additiv. Damit dieses nicht ausgewaschen wird und das Wurzelschutz-Additiv in die Umwelt gelangt, soll die Bitumenschicht (2) nach dem Verlegen nach unten in Richtung der abgedichteten Bauwerksfläche angeordnet sein.

Die untere Bitumenschicht (2) bildet zudem bevorzugt eine äussere Schicht des Bitumenkomposits (1) um eine optimale Abdichtung mit der abzudichtenden Bauwerksfläche zu erhalten.

Die obere Sperrschicht (3) bildet bevorzugt die andere, der Bitumenschicht (2) gegenüberliegende äussere Schicht des Bitumenkomposits (1).

In einer bevorzugten Ausführungsform besteht der Bitumenkomposit (1) im Wesentlichen aus einer unteren Bitumenschicht (2), einer oberen Sperrschicht (3, 3a, 3b, 3c), gegebenenfalls der Verstärkungsschicht (4), wobei eine oder beide Oberflächen des Bitumenkomposits (1) mit feinen Mineralpartikeln oder einem dünnen Polymerfilm beschichtet sein kann.

In einer bevorzugten Ausführungsform stellt der Bitumenkomposit (1) eine Bitumenbahn (1a) oder einen auf einer Bauwerksfläche (10) angeordneter Bitumenschichtkörper (1b) dar.

Der Begriff Bitumenbahn (1a) umfasst erfindungsgemäss Dachdichtungsbahnen und Dachpappe, welche oft lose, d.h. nicht vollflächig, verlegt und gegebenenfalls verklebt werden, sowie Bitumen-Schweissbahnen. Bitumen-Schweissbahnen werden in der Regel vollflächig verlegt und geflämmt, wodurch man mehrere Bahnen überlappend miteinander wasserdicht verschweissen kann.

Der Begriff Bitumenschichtkörper (1b) umfasst erfindungsgemäss einen Bitumenkomposit (1), welcher mehrere, typischerweise flächig aufeinander angeordnete Schichten, insbesondere mindestens eine Bitumenschicht (2), eine Sperrschicht (3) und gegebenenfalls eine Verstärkungsschicht (4), umfasst. Vorteilhafterweise sind die Schichten so angeordnet, dass sie allfällige Randzonen von darunterliegenden Schichten optimal überdecken.

Die Schichtdicke des erfindungsgemässen Bitumenkomposits (1) beträgt vorteilhafterweise etwa 1 bis 10 mm, bevorzugt etwa 2 bis 8 mm, insbesondere etwa 3 bis 7 mm. Die Schichtdicke wird beispielsweise optisch mit dem Lichtmikroskop, mit einer Messnadel und/oder eines Messschiebers oder einer Schublehre gemessen, wobei der Mittelwert von 5 Messungen ermittelt wird. Als bevorzugte Messmethode wird das Lichtmikroskop verwendet.

In einer weiteren Ausführungsform können zudem auf mindestens einer Oberfläche des erfindungsgemässen Bitumenkomposits (1) feine Mineralpartikel wie Talk, Sand und/oder Schieferplättchen angebracht sein. Dies kann beispielsweise durch Aufstreuen der Mineralpartikel auf den Bitumenkomposit (1), insbesondere auf die Bitumenschicht (2), die Sperrschicht (3a) und/oder die Bitumenschicht (9) erfolgen.

Es ist auch möglich, dass auf mindestens einer Oberfläche des erfindungsgemässen Bitumenkomposits (1) ein Polymerfilm, beispielsweise ein Polymerfilm aus Polypropylen (PP) oder Polyethylen (PE), angebracht ist. Die Schichtdicke von solchen Polymerfilmen beträgt bevorzugt 10 µm oder weniger.

In einer Ausführungsform ist eine Oberfläche des erfindungsgemässen Bitumenkomposits (1) mit feinen Mineralpartikeln beschichtet, während beispielsweise die andere Oberfläche mit einem Polymerfilm beschichtet ist.

In einer weiteren Ausführungsform ist auf mindestens einer Oberfläche, insbesondere auf einer Sperrschicht (3), kein Polymerfilm, insbesondere keine PP- oder PE-Polymerfilm, angebracht.

Der erfindungsgemässe Bitumenkomposit (1) weist in einer vorteilhaften Ausführungsform - insbesondere wenn er in Form einer Bitumenbahn (1a) vorliegt und zumindest die Bitumenschicht (2) ein Wurzelschutz-Additiv enthält - entlang mindestens eines Randes eine seitliche Randschicht auf, die im Wesentlichen kein Wurzelschutz-Additiv enthält, und so einen Rand R1 bildet. Dadurch wird das Auswaschen von Wurzelschutz-Additiv zusätzlich bei den Randzonen des Bitumenkomposits (1) verhindert oder zumindest deutlich reduziert. Typischerweise ist dieser Rand R1 Bitumen basiert und bedeckt den Rand der Bitumenschicht (2) sowie gegebenenfalls auch die Sperrschicht (3), oder einen Teil davon.

Der Rand R1 besitzt eine Breite, d.h. eine zur Schichtdicke des Bitumenkomposits (1) vertikal gemessenen Ausdehnung, von beispielsweise etwa 2 bis 10 cm, insbesondere von etwa 4 bis 8 cm. Diese Breite kann typischerweise optisch, gegebenenfalls unter Zuhilfenahme eines Lichtmikroskops und/oder eines Messschiebers oder einer Schublehre gemessen werden.

In einer anderen vorteilhaften Ausführungsform des erfindungsgemässen Bitumenkomposits (1) weist dieser - insbesondere wenn er in Form einer Bitumenbahn (1a) vorliegt - entlang mindestens eines Randes R2 einen Randbereich auf, bei welchem zumindest die obere Schicht des Bitumenkomposits (1) ein Wurzelschutz-Additiv enthält. Diese obere Schicht kann die Bitumenschicht (2) mit Wurzelschutz-Additiv sein, d.h. die Sperrschicht (3) wird in dieser Ausführungsform zur Herstellung des Randes R2 weggelassen. Alternativ kann in der Randzone die Sperrschicht (3) ein Wurzelschutz-Additiv enthalten, wodurch ein Rand R2 entsteht. Dabei kann die Bitumenschicht (9) der Sperrschicht (3a, 3b, 3c) in der Randzone des Randes R2 ein Wurzelschutz-Additiv umfassen und so als Bitumenschicht (8) ausgebildet sein. Dabei ist der Rand R2 vom Rand R1 verschieden. Beim Verlegen der Bitumenbahn (1a) wird der Rand R2 bevorzugt durch eine andere Bitumenbahn (1a) mit einem Rand ohne Wurzelschutz-Additiv, insbesondere mit einem Rand R1, überdeckt.

Der Rand R2 besitzt eine Breite, d.h. eine zur Schichtdicke der Bitumenkomposits (1) vertikal gemessene Ausdehnung, von beispielsweise 6 bis 8 cm. Diese Breite kann typischerweise optisch und/oder eines Messschiebers oder Schublehre gemessen werden.

In einer besonders bevorzugten Ausführungsform umfasst der Bitumenkomposit (1), insbesondere die Bitumenbahn (1a), auf einer Seite einen Rand R1 und auf der dem Rand R1 gegenüberliegenden Seite einen Rand R2, wobei bei der Verlegung der Bitumenbahnen der Rand R1 der einen Bitumenbahn auf den Rand R2 der anderen Bitumenbahn verlegt wird. Durch diese Anordnung wird verhindert, dass Wurzeln im Überlappungsbereich von zwei nebeneinander angeordneten Bitumenbahnen (1a), welche sich im Randbereich leicht überlappen, horizontal zwischen den beiden Bitumenbahnen, wie beispielsweise einer ersten Bitumenbahn mit Rand R1 und einer zweiten Bitumenbahn mit Rand R2, hindurch wachsen können. Dadurch wird das Wurzelwachstum gerade in der Randzone von Bitumenbahnen (1a) verhindert.

### Die Bitumenschicht (2)

Die Bitumenschicht (2) des erfindungsgemässen Bitumenkomposits (1) bildet die untere Schicht des Bitumenkomposits (1) und ist vorteilhafterweise entsprechend gekennzeichnet. Die Bitumenschicht (2) kann aus einer oder mehreren unterschiedlichen Bitumenschichten aufgebaut sein.

Ist der Bitumenkomposit (1) eine Bitumenbahn (1a) und somit die Bitumenschicht (2) Teil der Bitumenbahn (1a), wird die Bitumenschicht (2) typischerweise werkseitig auf herkömmliche Art und Weise während der Herstellung der Bitumenbahn (1a) hergestellt.

Ist der Bitumenkomposit (1) ein Bitumenschichtkörper (1b) und somit die Bitumenschicht (2) Teil des Bitumenschichtkörpers (1b), kann die Bitumenschicht (2) selbst eine Bitumenbahn sein, die auf die Bauwerksfläche (10) verlegt wird. Die Bitumenschicht (2) kann aber auch vor Ort beispielsweise mittels Flüssigbitumen hergestellt werden.

Geeignete Zusammensetzungen für die Bitumenschicht (2) sind dem Fachmann bekannt. Typischerweise basieren sie auf etwa 30 bis 70 Gew.- %, bevorzugt auf etwa 40 bis 60 Gew.-%, Bitumen und etwa 20 bis 40 Gew.-%, bevorzugt auf etwa 25 bis 35 Gew.-%, mineralischen Füllstoffen. Zudem können sie beispielsweise bis 30 Gew.-%, bevorzugt bis 25 Gew.- %, Kunststoff, wie zum Beispiel Styrol-Butadien-Styrol und/oder ataktisches Polypropylen, umfassen, wobei sich die Gewichtsangaben auf das Gesamtgewicht der Bitumenschicht (2) bezieht. Zusätzlich kann die Bitumenschicht (2) auch weitere Zusatzstoffe enthalten, insbesondere mindestens ein Wurzelschutz-Additiv.

Die Schichtdicke der Bitumenschicht (2) beträgt vorteilhafterweise etwa 0,1 bis 8 mm, bevorzugt etwa 0,1 bis 5 mm, insbesondere etwa 0,5 bis 3 mm. Sie wird beispielsweise optisch mit dem Lichtmikroskop, mit einer Messnadel und/oder eines Messschiebers oder einer Schublehre gemessen, wobei der Mittelwert von 5 Messungen ermittelt wird. Als bevorzugte Messmethode wird das Lichtmikroskop verwendet.

Wird der Bitumenkomposit (1) als Bitumenschichtkörper (1b) auf einem Bauwerkskörper angeordnet, wird die Bitumenschicht (2) vorteilhafterweise auf der Bauwerksfläche (10) separat verlegt, beispielsweise in Form einer Flüssigbitumen Schicht oder als Bitumenbahn. Eine solche Bitumenbahn kann ebenfalls spezifische Randzonen aufweisen, insbesondere - wie vorgängig beschrieben - einen Rand R1 und/oder einen Rand R2.

### Die Sperrschicht (3)

Die Sperrschicht (3) des erfindungsgemässen Bitumenkomposits (1) stellt
- eine Sperrschicht (3a) mit mindestens einem Hydrophobierungsmittel (5), wobei das Hydrophobierungsmittel (5) der Sperrschicht (3a) ein Alkoxysilan, Alkylalkoxysilan, Alkoxysiloxan, Alkylalkoxysiloxan, Alkylpolysiloxan, Siliconharz und/oder Alkalisiliconat darstellt,
- eine Sperrschicht (3b) mit einer Trennfolie (6), oder
- eine Sperrschicht (3c) mit mindestens einem wurzelfesten Geotextil (7) dar, wobei die Sperrschicht (3a) neben dem Hydrophobierungsmittel (5) auch eine Trennfolie (6) und/oder ein Geotextil (7), die Sperrschicht (3b) neben der Trennfolie (7) auch ein Hydrophobierungsmittel (5) , und die Sperrschicht (3c) neben dem Geotextil (7) auch ein Hydrophobierungsmittel (5) und/oder eine Trennfolie (6) umfassen kann. Zudem kann die Sperrschicht (3a) oder (3c) auch weitere, dem Fachmann bekannte Komponenten umfassen.

Die Schichtdicke der Sperrschicht (3) beträgt vorteilhafterweise etwa 0,1 bis 8 mm, bevorzugt etwa 0,1 bis 5 mm, insbesondere etwa 0,5 bis 3 mm. Sie wird beispielsweise optisch mit dem Lichtmikroskop, mit einer Messnadel und/oder eines Messschiebers oder einer Schublehre gemessen, wobei der Mittelwert von 5 Messungen ermittelt wird. Als bevorzugte Messmethode wird das Lichtmikroskop verwendet.

Stellt die Sperrschicht (3) eine Sperrschicht (3a) dar, umfasst die Bitumenschicht (2) des erfindungsgemässen Bitumenkomposits (1) mindestens ein Wurzelschutz-Additiv.

Umfasst der Bitumenkomposit (1) im Wesentlichen die Bitumenschicht (2) und mindestens ein Hydrophobierungsmittel (5) , wobei das Hydrophobierungsmittel (5) der Sperrschicht (3a) ein Alkoxysilan, Alkylalkoxysilan, Alkoxysiloxan, Alkylalkoxysiloxan, Alkylpolysiloxan, Siliconharz und/oder Alkalisiliconat darstellt, als Sperrschicht (3a), kann das Hydrophobierungsmittel (5) Teil der Bitumenschicht (2) sein und/oder als Beschichtung auf mindestens eine Oberfläche der Bitumenschicht (2) - insbesondere vollflächig - aufgetragen werden.

Umfasst die Sperrschicht (3a) neben dem mindestens einen Hydrophobierungsmittel (5) wobei das Hydrophobierungsmittel (5) der Sperrschicht (3a) ein Alkoxysilan, Alkylalkoxysilan, Alkoxysiloxan, Alkylalkoxysiloxan, Alkylpolysiloxan, Siliconharz und/oder Alkalisiliconat darstellt, auch eine Bitumenschicht (9), kann das Hydrophobierungsmittel (5) Teil der Bitumenschicht (9) sein. Dabei wird das Hydrophobierungsmittel (5) vorteilhafterweise in die Bitumenmischung eingearbeitet, mit welcher die Bitumenschicht (9) anschliessend hergestellt wird. Alternativ - oder zusätzlich - wird das Hydrophobierungsmittel (5) bevorzugt vollflächig auf die Bitumenschicht (2) und/oder die Bitumenschicht (9) aufgetragen. In einer Ausführungsform befindet sich die Schichtung aus Hydrophobierungsmittel (5) , wobei das Hydrophobierungsmittel (5) der Sperrschicht (3a) ein Alkoxysilan, Alkylalkoxysilan, Alkoxysiloxan, Alkylalkoxysiloxan, Alkylpolysiloxan, Siliconharz und/oder Alkalisiliconat darstellt, zwischen der Bitumenschicht (2) und der Bitumenschicht (9). In einer anderen Ausführungsform befindet sich die Bitumenschicht (9) zwischen der Bitumenschicht (2) und der Schicht aus Hydrophobierungsmittel (5).

Die Bitumenschicht (9) kann - abgesehen vom Wurzelschutz-Additiv - die gleiche oder eine andere Zusammensetzung aufweisen wie die Bitumenschicht (2).

In einer bevorzugten Ausführungsform umfasst der Bitumenkomposit (1) enthaltend die Sperrschicht (3a) keine PVC Schicht, insbesondere keine wasserdichte PVC Schicht.

In einer anderen bevorzugten Ausführungsform umfasst der Bitumenkomposit (1) enthaltend die Sperrschicht (3a) keine Isolationsschicht, insbesondere keine obere und/oder untere Isolationsschicht.

Das mindestens eine Hydrophobierungsmittel (5) der Sperrschicht (3a) umfasst ein Alkoxysilan und/oder Alkylalkoxysilan, gemeinsam auch vereinfacht "Silane" genannt, ein Alkoxysiloxan, Alkylalkoxysiloxan, gemeinsam auch vereinfacht "Sioxane" genannt, ein Alkylpolysiloxan, Siliconharz und/oder Alkalisiliconat. Die Alkylgruppe ist bevorzugt eine C₁-bis C₁₈- Alkylgruppe, insbesondere eine C₃- bis C₁₂- Alkylgruppe, wobei Methyl-, Ethyl-, Propyl-, Octyl- sowie Isooctyl-Gruppen ganz besonders bevorzugt sind. Die Alkoxygruppe ist bevorzugt eine C₁- bis C₈-Alkoxygruppe, insbesondere eine C₁- bis C₃- Alkoxygruppe, wobei Methoxy- , Ethoxy-, Propoxy- und/oder Isopropoxy-Gruppen besonders bevorzugt sind. Die Alkylgruppe und/oder die Alkoxygruppe können auch substituiert, insbesondere auch vollständig substituiert sein, beispielsweise mit Halogenen wie Fluor, Chlor und/oder Brom. Geeignete Hydrophobierungsmittel (5) sind dem Fachmann bekannt und er kann auch eine geeignete, optimale Auswahl treffen.

Das mindestens eine Hydrophobierungsmittel (5) kann beispielsweise als reine Flüssigkeit, Lösung, Paste, Emulsion, Suspension und/oder Dispersion, wobei die Lösung, Emulsion, Suspension und/oder Dispersion bevorzugt als wässrige Lösung, Emulsion, Suspension und/oder Dispersion verarbeitet werden. So kann das Hydrophobierungsmittel (5) auf einfache Art und Weise beispielsweise auf die Bitumenschicht (2) aufgetragen, insbesondere aufgesprüht, aufgerollt und/oder aufgestrichen werden.

Stellt die Sperrschicht (3) eine Sperrschicht (3b) dar, besteht die Sperrschicht (3b) aus einer Trennfolie (6) und einer Bitumenschicht ohne Wurzelschutz-Additiv (9). Zudem umfasst die Bitumenschicht (2) des erfindungsgemässen Bitumenkomposits (1) mindestens ein organisches Wurzelschutz-Additiv, wobei die Trennfolie (6) im Wesentlichen zwischen der Bitumenschicht (2) und der Bitumenschicht (9) angeordnet ist.

Die Bitumenschicht (9) ist von der Bitumenschicht (2) verschieden. Die Bitumenschicht (9) kann - bis auf das Wurzelschutz-Additiv - die gleiche oder eine andere Zusammensetzung aufweisen wie die Bitumenschicht (2). Die Trennfolie (6) der Sperrschicht (3b) umfasst bevorzugt eine Metall Folie und/oder Polymer Folie. Geeignete Beispiele bevorzugter Metall Folien basieren auf einer Stahl-Folie, Aluminium-Folie, Kupferfolie, Aluminium-Folie mit Glasgitter und/oder Aluminium- und/oder Stahlfolie mit Trägervlies. Geeignete Beispiele bevorzugter Polymer Folien basieren auf einer Folie auf Basis von Polyethylen (PE), Polypropylen (PP), PE/PP-Mischpolymerisat, Polyolefin (PO), insbesondere Thermoplastisches Polyolefin (TPO), Ethylen-Propylen-Dien-Mischpolymerisat (EPDM), Polyvinylchlorid (PVC), Polyamid (PA), Polyisobutylen (PIB), Isobutylen-Isopren-Copolymer (IIR), Polyethylenterephthalat (PET) und/oder Polyacrylnitril (PAN), wobei Folien auf Basis von PE, PP und/oder TPO besonders bevorzugt sind. Solche Trennfolien (6) sind dem Fachmann bekannt und er kann auch eine geeignete, optimale Auswahl treffen.

Der Bitumenkomposit (1) umfassend die Sperrschicht (3b) enthält kein PE-Geflecht, insbesondere kein PE-Geflecht an den äusseren Schichten des Bitumenkomposits (1).

Die Schichtdicke der Trennschicht (6) beträgt vorteilhafterweise etwa 0,1 bis 8 mm, bevorzugt etwa 0,1 bis 5 mm, insbesondere etwa 0,5 bis 3 mm. Sie wird beispielsweise optisch mit dem Lichtmikroskop, mit einer Messnadel und/oder eines Messschiebers oder einer Schublehre gemessen, wobei der Mittelwert von 5 Messungen ermittelt wird. Als bevorzugte Messmethode wird das Lichtmikroskop verwendet.

Stellt die Sperrschicht (3) eine Sperrschicht (3c) dar, umfasst die Sperrschicht (3c) mindestens ein wurzelfestes Geotextil (7) sowie gegebenenfalls eine Bitumenschicht ohne Wurzelschutz-Additiv (9).

Die im erfindungsgemässen Bitumenkomposit (1) einsetzbaren Geotextilien (7) können in Form von Geweben und/oder Vliesen vorliegen und auf Basis von natürlichen und/oder synthetischen Materialien sein. Beispielhafte natürliche Materialien umfassen Schilf, Jute und Kokos, und beispielhafte synthetische Materialien umfassen Polypropylen, Polyamid, Polyester und Polyethylen.

Unter dem Begriff "wurzelfestes Geotextil" versteht der Fachmann, dass das Geotextil (7) in einer Art und Weise so kompakt hergestellt ist, dass keine Pflanzenwurzeln das Geotextil (7) durchdringen können. Zudem sterben typischerweise Reste von Unkrautwurzeln unter dem Geotextil (7) ab, wodurch auch keine Pflanzen von unten her das Geotextil (7) durchdringen können. Somit unterscheidet sich das Geotextil (7) deutlich von der optional einsetzbaren Verstärkungsschicht (4).

Geeignete wurzelfeste Geotextilien(7) sind dem Fachmann bekannt und im Handel erhältlich. Sie sind u.a. beständig gegen Verrottung, Feuchtigkeit, Schimmel, Ungeziefer wie auch im Boden vorkommende Huminsäuren.

Nicht-limitierende Beispiele geeigneter Geotextilien (7) umfassen Geotextilien nach DIN EN 13249:2001 für Strassen und Verkehrsflächen, nach DIN EN 13250:2001 für den Eisenbahnbau, nach DIN EN 13251:2001 für den Erd- und Grundbau sowie für Stützbauwerke, nach DIN EN 13252:2001 für Dränanlagen, nach DIN EN 13253:2001 für Erosionsschutzanlagen, den Küstenschutz und Deckwerksbau, nach DIN EN 13254:2001 für Rückhaltebecken und Staudämme, nach DIN EN 13255:2001 für den Kanalbau, nach DIN EN 13256:2001 für den Tunnelbau und Tiefbauwerke, nach DIN EN 13257:2001 für den Deponiebau, nach DIN EN 13265:2001 für Klärteiche und Sedimentationsanlagen, nach CEN 189072 für den Oberflächenerosionsschutz, und nach CEN 189038 für den Asphaltoberbau.

Stellt die Sperrschicht (3) eine Sperrschicht (3c) dar, umfasst die Bitumenschicht (2) des erfindungsgemässen Bitumenkomposits (1) bevorzugt mindestens ein Wurzelschutz-Additiv.

Umfasst der Bitumenkomposit (1) im Wesentlichen die Bitumenschicht (2) und mindestens ein Geotextil (7) als Sperrschicht (3c), ist das Geotextil (7) bevorzugt auf einer Oberfläche der Bitumenschicht (2) - insbesondere vollflächig - angeordnet.

Umfasst die Sperrschicht (3c) neben dem mindestens einen Geotextil (7) auch eine Bitumenschicht ohne Wurzelschutz-Additiv (9), ist das Geotextil (7) in einer bevorzugten Ausführungsform im Wesentlichen zwischen der Bitumenschicht (2) und der Bitumenschicht (9) angeordnet. In einer anderen Ausführungsform befindet sich die Bitumenschicht (9) zwischen der Bitumenschicht (2) und dem Geotextil (7).

In einer bevorzugten Ausführungsform enthält der Bitumenkomposit (1) umfassend die Sperrschicht (3c) keine Verstärkungsschicht (4).

In einer anderen bevorzugten Ausführungsform enthält der Bitumenkomposit (1) umfassend die Sperrschicht (3c) zusätzlich zum Geotextil (7) eine Verstärkungsschicht (4).

Die Bitumenschicht (9) ist von der Bitumenschicht (2) verschieden. Die Bitumenschicht (9) kann - bis auf das Wurzelschutz-Additiv - die gleiche oder eine andere Zusammensetzung aufweisen wie die Bitumenschicht (2).

Geeignete Zusammensetzungen für die Bitumenschicht (9) beträgt - analog der Bitumenschicht (2) - typischerweise etwa 30 bis 70 Gew.-%, bevorzugt auf etwa 40 bis 60 Gew.-%, Bitumen und etwa 20 bis 40 Gew.-%, bevorzugt auf etwa 25 bis 35 Gew.-%, mineralischen Füllstoffen. Zudem kann sie beispielsweise bis 30 Gew.-%, bevorzugt bis 25 Gew.-%, Kunststoff, wie zum Beispiel Styrol-Butadien-Styrol und/oder ataktisches Polypropylen, umfassen, wobei sich die Gewichtsangaben auf das Gesamtgewicht der Bitumenschicht (9) bezieht. Zusätzlich kann die Bitumenschicht (9) auch weitere Zusatzstoffe enthalten.

Die Bitumenschicht (9) der Sperrschicht (3b) und die Bitumenschicht (9) der Sperrschicht (3c) können die gleiche oder eine unterschiedliche Zusammensetzung aufweisen. Jedoch enthält die Bitumenschicht (9) der Sperrschicht (3b) wie auch der Sperrschicht (3c) kein Wurzelschutz-Additiv.

Das wurzelfeste Geotextil (7) der Sperrschicht (3c) ist bevorzugt ein Gewebe, ein Vlies und/oder ein Verbundstoff und/oder auf Basis von Naturfasern wie Schilf, Jute und/oder Kokos, und/oder synthetischen Fasern wie Polypropylen, Polyamid, Polyester und/oder Polyethylen. Dabei kann das Geotextil zusätzlich beschichtet und/oder thermisch behandelt sein. Solche Geotextilien (7) sind im Handel erhältlich, dem Fachmann bekannt und er kann auch eine geeignete, optimale Auswahl treffen.

### Die Verstärkungsschicht (4)

Der erfindungsgemässe Bitumenkomposit (1) kann gegebenenfalls eine Verstärkungsschicht (4) umfassen. Diese ist innerhalb - und bevorzugt vollflächig - in der Bitumenschicht (2) angeordnet.

Die Verstärkungsschicht (4) kann ein Gewebe und/oder ein Vlies umfassen. Geeignete Verstärkungsschichten (4) sind dem Fachmann bekannt und im Handel erhältlich. Nicht limitierende Beispiele umfassen Polyestervlies, Glasvlies, Glasgewebe, Jutegewebe, Metallgeflecht und/oder Armierungsgitter, insbesondere ein Armierungsgitter aus Metall.

Die Verstärkungsschicht (4) kann auch ein organisches Wurzelschutz-Additiv enthalten. Das Wurzelschutz-Additiv kann beispielsweise auf die Verstärkungsschicht (4) aufgesprüht werden und/oder die Verstärkungsschicht (4) kann in und/oder mit einem Wurzelschutz-Additiv getränkt werden.

Die Verstärkungsschicht (4) ist eine üblich eingesetzte Verstärkungsschicht und dient zur mechanischen Stabilisierung der Bitumenschicht. Solche Verstärkungsschichten - auch Vliesträgereinlagen genannt - sind sehr dünne, reissfeste Schichten. Allerdings bieten sie aufgrund ihres Aufbaus keinen Schutz vor der Penetration von Pflanzenwurzeln, d.h. sie weisen keine wurzelfesten Eigenschaften auf. Daher können sie nicht als Geotextil (7) im Sinne der vorliegenden Erfindung bezeichnet werden.

### Das Wurzelschutz-Additiv

Das eingesetzte Wurzelschutz-Additiv ist erfindungsgemäss ein organisches Wurzelschutz-Additiv und verhindert das weitere Wachstum von Wurzeln.

Umfasst eine Bitumenschicht ein Wurzelschutz-Additiv, wird das Wurzelschutz-Additiv bevorzugt der Bitumenmischung beigemischt, mit welcher die Bitumenschicht hergestellt wird. Dies erlaubt eine homogene Verteilung des Wurzelschutz-Additivs in der ganzen Matrix der Bitumenschicht. Alternativ - oder zusätzlich - kann das Wurzelschutz-Additiv in und/oder auf die Verstärkungsschicht (4) gebracht werden, wodurch das Wurzelschutz-Additiv Teil der Bitumenschicht, insbesondere der Bitumenschicht (2), wird.

In einer bevorzugten Ausführungsform enthält die Bitumenschicht (2) mindestens ein organisches Wurzelschutz-Additiv. Die Summe an Wurzelschutz-Additiv in der Bitumenschicht (2) beträgt bevorzugt von 0,01 bis 3 Gew.-%, insbesondere von 0,05 bis 1 Gew.-%, bezogen auf die Gesamtmasse des Bitumenkomposits (1) mit Wurzelschutz-Additiv.

Geeignete Wurzelschutz-Additive sind dem Fachmann bekannt. Das organische Wurzelschutz-Additiv umfasst in einer bevorzugten Ausführungsform insbesondere ein Herbizid, ein Fungizid und/oder ein Biozid, wobei Herbizide besonders bevorzugt sind.

Wurzelschutz-Additive können beispielsweise in reiner Form, als Emulsion, als Suspension, als Lösung und/oder als Mischung eingesetzt werden, wobei als Mischung beispielsweise eine Mischung aus Polymer und Wurzelschutz-Additiv verwendet werden kann.

Geeignete Wurzelschutz-Additive umfassen auch deren Vorstufen, beispielsweise Ester von geeigneten Verbindungen, welche zum Beispiel durch Hydrolyse das gewünschte Wurzelschutz-Additiv freisetzen, sowie deren Reaktionsprodukte, beispielsweise Hydrolyseprodukte von Wurzelschutz-Additiven. Zudem werden die reinen enantiomeren Formen von geeigneten Wurzelschutz-Additiven wie auch deren racemischen Gemische mitumfasst.

Nicht limitierte Beispiele geeigneter Wurzelschutz-Additive umfassen Preventol^{®} B2, Preventol^{®} B5, Preventol^{®} RC, Herbitect^{®} HE, Herperit^{®}, Sulcotrion, Mesotrion, Atrizin^{®}, Terbuthylazin, Isoproturon, Glyphosat, Methylchlorphenoxypropionsäure, auch Mecoprop (MCPP) genannt, C₁- bis C₁₈- Ester von Mecoprop wie beispielsweise 2-Ethylhexylester Mecoprop oder Glykolester Mecoprop, MCPA oder 2-Methyl-4-chlorphenoxyessig-säure, 4-Chlor-2-Methylphenol (4-CMP), 2,4-Dichlorphenoxyessigsäure, auch 2,4-D genannt, Dicamba oder 3,6-Dichlor-2-methoxybenzoesäure, Dichlorprop, Diazinon, Diuron, Carbendazim, Terbutryn, Irganol, IPBC, Isothiazoninon, TectoGreen MP, TectoGreen M, TectoGreen MP-E, TectoGreen P, TectoGreen P-5, Isothiazolinon-Verbindungen, Tebuconazol, Organozinn-Verbindungen und/oder Bleichromat. Bevorzugt sind insbesondere Herbitect^{®} HE, Herperit^{®}, TectoGreen MP, TectoGreen M, TectoGreen MP-E, TectoGreen P, TectoGreen P-5 sowie C₁- bis C₁₈-Ester von Mecoprop wie beispielsweise 2-Ethylhexylester Mecoprop und/oder Glykolester Mecoprop.

### Verfahren zur Herstellung des Bitumenkomposits (1)

Der erfindungsgemässe Bitumenkomposit (1) kann auf verschiedene Arten hergestellt werden.

So kann der Bitumenkomposit (1) beispielsweise werkseitig, insbesondere in Form einer Bitumenbahn (1a) hergestellt werden. Der Bitumenkomposit (1) kann aber auch direkt auf einer Bauwerksfläche (10), typischerweise auf einer Baustelle und bevorzugt in Form eines Bitumenschichtkörpers (1b), hergestellt werden.

In einer ersten bevorzugten Ausführungsform (i) werden die Bitumenschicht (2) und die Sperrschicht (3) miteinander in Kontakt gebracht:
- Stellt die Sperrschicht (3) eine Sperrschicht (3a) dar und umfasst somit ein Hydrophobierungsmittel (5), wobei das Hydrophobierungsmittel (5) der Sperrschicht (3a) ein Alkoxysilan, Alkylalkoxysilan, Alkoxysiloxan, Alkylalkoxysiloxan, Alkylpolysiloxan, Siliconharz und/oder Alkalisiliconat darstellt, ist die Bitumenschicht (2) vorteilhafterweise eine Bitumenbahn oder eine auf einer Bauwerksfläche (10) mittels Flüssigbitumen hergestellte Bitumenschicht (2). Dementsprechend kann die Sperrschicht (3a) umfassend das Hydrophobierungsmittel (5) auf die Bitumenbahn, d.h. auf die Bitumenschicht (2), aufgetragen und somit mit dieser in Kontakt gebracht werden. Umfasst die Sperrschicht (3a) auch die Bitumenschicht (9), wird in dieser Ausführungsform das Hydrophobierungsmittel (5) bevorzugt in die Bitumenmischung, aus welcher die Bitumenschicht (9) hergestellt wird, eingearbeitet und als Komposit umfassend die Bitumenmischung und das Hydrophobierungsmittel (5) auf die Bitumenschicht (2) aufgetragen. Alternativ wird mit dem Bitumenmischungs-Hydrophobierungsmittel-Komposit eine Sperrschicht (3a) gebildet, welche anschliessend mit der Bitumenschicht (2) in Kontakt gebracht wird.
- Stellt die Sperrschicht (3) eine Sperrschicht (3b) oder eine Sperrschicht (3c) dar, und umfasst somit eine Trennfolie (6) oder ein Geotextil (7), kann beispielsweise die Bitumenschicht (2) direkt auf der Sperrschicht (3b, 3c) hergestellt werden, d.h. die Bitumenmischung, mit welcher die Bitumenschicht (2) hergestellt wird, kann auf die Sperrschicht (3b, 3c) - und somit auf die Trennfolie (6) oder das Geotextil (7) - aufgetragen werden. Auch ist es möglich, die Bitumenschicht (2) und die Trennfolie (6) respektive das Geotextil (7) während oder nach der Herstellung der Bitumenschicht (2) miteinander in Kontakt zu bringen.

In einer zweiten bevorzugten Ausführungsform (ii) werden die Bitumenschicht (2) und das Hydrophobierungsmittel (5), die Trennfolie (6) oder das Geotextil (7) miteinander in Kontakt gebracht, beispielsweise wie unter Ausführungsform (i) beschrieben. In einem anschliessenden Schritt wird die Bitumenschicht (9) auf das Hydrophobierungsmittel (5), die Trennfolie (6) und/oder das Geotextil (7) angebracht. Dabei kann die Bitumenschicht (9) als Bitumenschicht oder als Bitumenmischung, welche anschliessend zur Bitumenschicht (9) härtet, auf das Hydrophobierungsmittel (5), die Trennfolie (6) und/oder das Geotextil (7) angebracht werden.

In einer dritten bevorzugten Ausführungsform (iii) werden die Bitumenschicht (2) und das Hydrophobierungsmittel (5), die Trennfolie (6) oder das Geotextil (7) und die Bitumenschicht (9) so miteinander in Kontakt gebracht, dass das Hydrophobierungsmittel (5), die Trennfolie (6) oder das Geotextil (7) im Wesentlichen zwischen der Bitumenschicht (2) und der Bitumenschicht (9) angeordnet wird.

Umfasst der Bitumenkomposit (1) eine Verstärkungsschicht (4), wird vorteilhafterweise die Verstärkungsschicht (4) bei der Herstellung der Bitumenschicht (2) in die Bitumenschicht (2), bei der Herstellung der Sperrschicht (3) in die Sperrschicht (3) und/oder bei der Herstellung des Bitumenkomposits (1) zwischen die Bitumenschicht (2) und die Sperrschicht (3) eingearbeitet.

### Verfahren zum Abdichten von Bauwerksflächen (10) umfassend den Bitumenkomposit (1)

Das Verfahren zum Abdichten von Bauwerksflächen umfassend den erfindungsgemässen und erfindungsgemäss hergestellten Bitumenkomposit (1) kann auf verschiedene Arten erfolgen.

In einer bevorzugten Ausführungsform wird der Bitumenkomposit (1) werkseitig hergestellt und stellt so bevorzugt eine Bitumenbahn (1a) dar, wobei die Bitumenbahn (1a) in einem nachfolgenden Schritt auf eine Bauwerksfläche (10) aufgetragen wird.

In einer anderen bevorzugten Ausführungsform wird der Bitumenkomposit (1) direkt auf der Bauwerksfläche (10) hergestellt, indem in einem ersten Schritt die Bitumenschicht (2) auf die Bauwerksfläche (10) verlegt wird und nachfolgend mindestens eine Sperrschicht (3a, 3b, 3c) umfassend das Hydrophobierungsmittel (5), die Trennfolie (6) und/oder das Geotextil (7) auf die Bitumenschicht (2) aufgetragen und anschliessend gegebenenfalls mit der Bitumenschicht (9) überdeckt wird.

Der Bitumenkomposit (1) wird vorteilhafterweise so auf die Bauwerksfläche (10) verlegt, dass die Bitumenschicht (2), welche je nach Sperrschicht (3) ein Wurzelschutz-Additiv enthält oder enthalten kann, zur Bauwerksfläche (10) hin und die Sperrschicht (3) auf der zur Bauwerksfläche (10) gegenüberliegenden Seite angeordnet ist.

Mit dem erfindungsgemässen Verfahren zum Abdichten von Bauwerksflächen (10) mit dem erfindungsgemässen Bitumenkomposit (1) und dem nach dem erfindungsgemässen Verfahren hergestellten Bitumenkomposit (1) können im Wesentlichen alle Bauwerksflächen abgedichtet werden. Dem Fachmann sind geeignete Bauwerksflächen bekannt.

Besonders geeignete Bauwerksflächen zum Abdichten mit dem erfindungsgemässen Bitumenkomposit (1) umfassen Gebäudedächer, Innen- und Aussenbereiche von Tunnels, Überdachungen , insbesondere Überdachungen von Strassen- und/oder Eisenbahnlinien, sowie Brücken und/oder Schwimmbäder. Die Bauwerksflächen können beispielsweise Beton, Metall, Stahl, Stahlblech und/oder Holz umfassen.

### Verwendung des Bitumenkomposits (1) und der abgedichteten Bauwerksfläche

Der erfindungsgemässe Bitumenkomposit (1) und der erfindungsgemäss hergestellte Bitumenkomposit (1) können vielfältig verwendet werden. Bevorzugt werden sie verwendet zum Abdichten von Bauwerksflächen (10), wobei die Bauwerksflächen (10) insbesondere Bauwerksflächen (10) von Strassen, Verkehrsflächen, Stützbauwerke, Dränanlagen, Rückhaltebecken, Erosionsschutzanlagen, Staudämmen, Tiefbauwerken, Klärteichen und Sedimentationsanlagen, Gebäudedächer, Innen- und Aussenbereiche von Tunnels, Überdachungen, insbesondere Überdachungen von Strassen und/oder Eisenbahnlinien, Brücken und/oder Schwimmbäder, beim Küstenschutz, Deckwerksbau, Kanalbau, Tunnelbau, Deponiebau, Oberflächenerosionsschutz, Asphaltoberbau, Verkehrswegebau, Eisenbahnbau, Erd- und/oder Grundbau darstellen.

In einer bevorzugten Ausführungsform umfassen die Bauwerksflächen (10) Beton, Metall, Stahl, Stahlblech und/oder Holz, und/oder werden die abgedichteten Bauwerksflächen, insbesondere die Gebäudedächer, begrünt.

Die erfindungsgemäss mit dem Bitumenkomposit (1) abgedichteten Bauwerksflächen und/oder nach dem erfindungsgemässen Verfahren hergestellten abgedichteten Bauwerksflächen werden bevorzugt bei Strassen, Verkehrsflächen, Stützbauwerken, Dränanlagen, Rückhaltebecken, Erosionsschutzanlagen, Staudämmen, Tiefbauwerken, Klärteichen und Sedimentationsanlagen, Gebäudedächer, Innen- und Aussenbereichen von Tunnels, Überdachungen, insbesondere Überdachungen von Strassen und/oder Eisenbahnlinien, bei Brücken, Schwimmbäder, beim Küstenschutz, beim Deckwerksbau, Kanalbau, Tunnelbau, Deponiebau, Oberflächenerosionsschutz, Asphaltoberbau, Verkehrswegebau, Eisenbahnbau, Erd- und/oder Grundbau verwendet.

Im Folgenden werden nicht-limitierende, bevorzugte Ausführungsformen des erfindungsgemässen und erfindungsgemäss erhaltenen Bitumenkomposits (1) sowie gemäss dem erfindungsgemässen Verfahren mit dem Bitumenkomposit (1) abgedichtete Bauwerksflächen anhand der nachfolgenden Zeichnungen beschrieben. Diese sind nicht einschränkend auszulegen und werden als Bestandteil der Beschreibung verstanden:

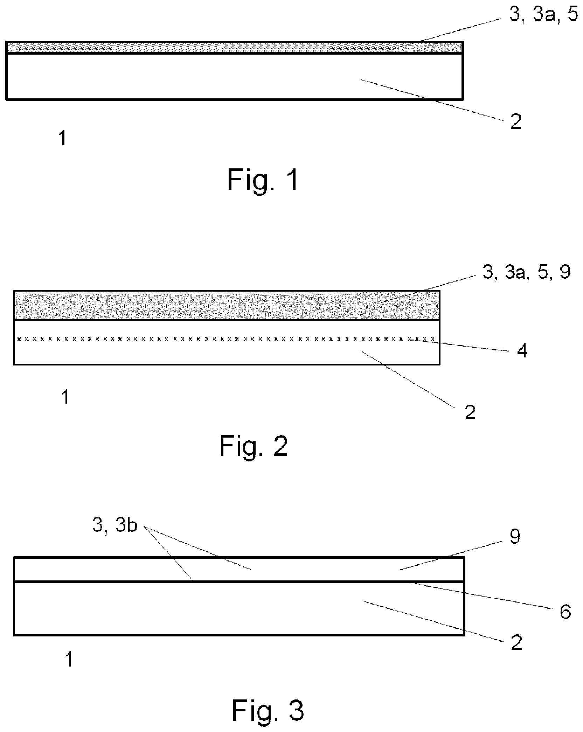

- Fig. 1: zeigt beispielhaft den Bitumenkomposit (1) mit der Bitumenschicht (2) und der Sperrschicht (3). In Fig. 1 ist die Sperrschicht (3) als Sperrschicht (3a) dargestellt umfassend das Hydrophobierungsmittel (5). Die Bitumenschicht (2) umfasst bevorzugt ein Wurzelschutz-Additiv.
- Fig. 2: zeigt analog Fig. 1 den Bitumenkomposit (1) mit der Bitumenschicht (2), in welche die Verstärkungsschicht (4) eingearbeitet ist. Auf einer Seite der Bitumenschicht (2), typischerweise auf derjenigen Seite, welche nach dem Verlegen des Bitumenkomposits (1) der Bauwerksfläche gegenüberliegt, ist die Sperrschicht (3) angeordnet. In Fig. 2 ist die Sperrschicht (3) als Sperrschicht (3a) dargestellt umfassend das Hydrophobierungsmittel (5) und die Bitumenschicht (9).
- Fig. 3: zeigt analog Fig. 1 den Bitumenkomposit (1) mit der Bitumenschicht (2) und der Sperrschicht (3), welche die Trennfolie (6) und die Bitumenschicht (9) umfasst und somit die Sperrschicht (3b) darstellt.

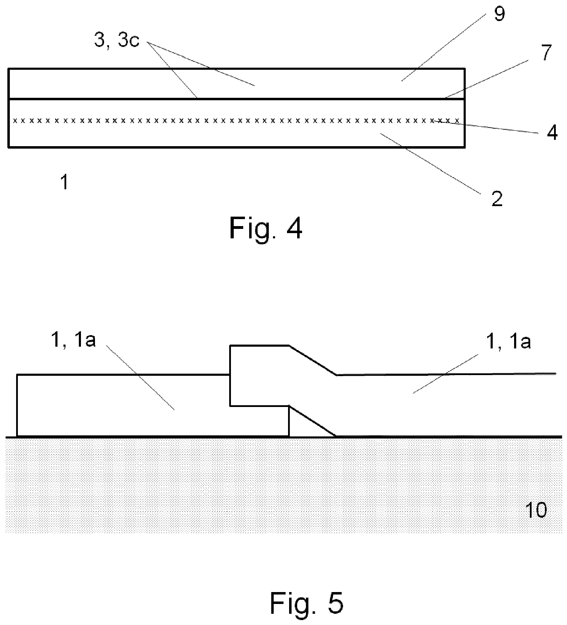

- Fig. 4: zeigt analog Fig. 2 den Bitumenkomposit (1) mit der Bitumenschicht (2), in welche die Verstärkungsschicht (4) eingearbeitet ist. Auf einer Seite der Bitumenschicht (2) ist die Sperrschicht (3) angeordnet umfassend ein Geotextil (7) und die Bitumenschicht (9). Somit stellt die Sperrschicht (3) eine Sperrschicht (3c) dar.
- Fig. 5: zeigt beispielhaft eine abgedichtete Bauwerksfläche umfassend die Bauwerksfläche (10), auf welcher der Bitumenkomposit (1) angeordnet und somit verlegt ist. Der Bitumenkomposit (1) ist als eine typischerweise werkseitig hergestellte Bitumenbahn (1a) dargestellt, wobei die später verlegte Bitumenbahn (1a) im Randbereich die früher verlegte Bitumenbahn (1a) überlappt. Die Sperrschicht (3) der Bitumenbahn (1a) kann eine Sperrschicht (3a, 3b und/oder 3c) sein. Somit kann eine Bitumenbahn eine Art Sperrschicht - beispielsweise eine Sperrschicht (3a) - und eine andere Bitumenbahn eine andere Art Sperrschicht - beispielsweise eine Sperrschicht (3b) - aufweisen. In dieser Darstellung weist der bildseitig rechte Randbereich der linken Bitumenbahn (1a) einen Rand R2 auf, in welche der linke Randbereich der nachfolgend verlegte Bitumenbahn (1a) - hier auf der rechten Bildseite dargestellt - verlegt werden kann. Dadurch kann der Wurzelschutz im Überlappungsbereich der beiden Bitumenbahnen (1a), insbesondere wenn die Bitumenbahn (1a) eine untere Schicht mit Wurzelschutz-Additiv und eine obere Schicht ohne Wurzelschutz-Additiv umfasst, optimiert und gleichzeitig die Auswaschung von Wurzelschutz-Additiv reduziert werden.

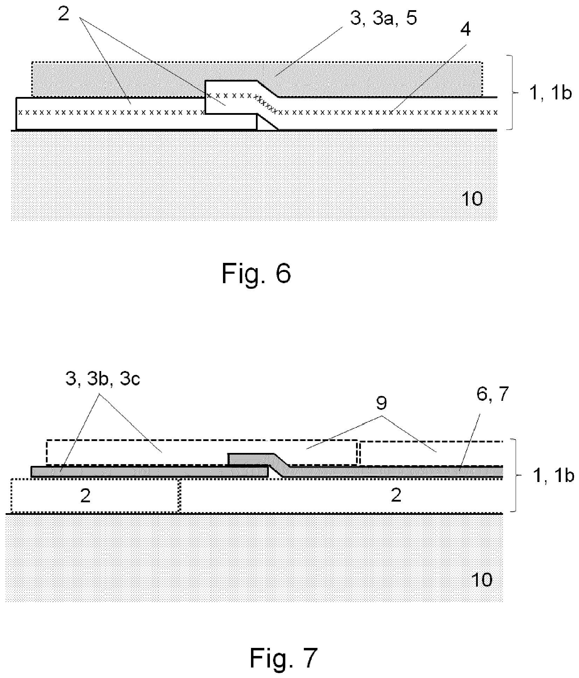

- Fig. 6: zeigt beispielhaft eine abgedichtete Bauwerksfläche umfassend die Bauwerksfläche (10) und den Bitumenkomposit (1). In Fig. 6 ist der Bitumenkomposit (1) als Bitumenschichtkörper (1b) dargestellt, welcher typischerweise während dem Abdichten der Bauwerksfläche (10) erstellt wird. Dies erlaubt eine optimale Abdeckung von Randbereichen einzelner verlegter Schichten. So sind beispielhaft zwei sich überlappende Bitumenschichten (2) dargestellt, welche beide eine Verstärkungsschicht (4) aufweisen. Auf den Bitumenschichten (2) ist als Sperrschicht (3) eine Sperrschicht (3a), umfassend mindestens ein Hydrophobierungsmittel (5), angeordnet, welche den überlappenden Randbereich der Bitumenschichten (2) nahtlos überdeckt.
- Fig. 7: zeigt beispielhaft eine abgedichtete Bauwerksfläche umfassend die Bauwerksfläche (10) und den Bitumenkomposit (1), hier als Bitumenschichtkörper (1b) dargestellt. Die Bitumenschichten (2), beispielsweise in Form von Bitumenbahnen, sind beispielhaft nebeneinander angeordnet. Die Randzonen der nebeneinander angeordneten Bitumenbahnen sind von der Sperrschicht (3), hier als Sperrschicht (3b, 3c) dargestellt umfassend eine Trennfolie (6) und/oder ein Geotextil (7), nahtlos überdeckt. Die Trennfolie (6) und/oder das Geotextil (7) sind beispielhaft überlappend dargestellt, um einen optimalen Wurzelschutz zu gewährleisten. Die Trennfolie (6) und/oder das Geotextil (7) sind zudem von einer Bitumenschicht (9) überdeckt, welche ebenfalls Teil der Sperrschicht (3b, 3c) ist. Dabei überdeckt die Bitumenschicht (9) im Wesentlichen vollständig den Randbereich der Trennfolie (6) und/oder des Geotextils (7) um einen optimalen Wurzelschutz zu gewährleisten.

## Patentansprüche

1. Bitumenkomposit (1) mit Schutz vor Pflanzenwurzeln, umfassend eine untere Bitumenschicht (2), eine obere Sperrschicht (3) und gegebenenfalls eine innerhalb der Bitumenschicht (2) angeordnete Verstärkungsschicht (4), **dadurch gekennzeichnet, dass** die Sperrschicht (3)
i) eine Sperrschicht (3a) darstellt umfassend mindestens ein Hydrophobierungsmittel (5) und gegebenenfalls eine Bitumenschicht ohne Wurzelschutz-Additiv (9), wobei die Bitumenschicht (2) mindestens ein Wurzelschutz-Additiv umfasst, wobei das Hydrophobierungsmittel (5) der Sperrschicht (3a) ein Alkoxysilan, Alkylalkoxysilan, Alkoxysiloxan, Alkylalkoxysiloxan, Alkylpolysiloxan, Siliconharz und/oder Alkalisiliconat darstellt,
ii) eine Sperrschicht (3b) darstellt bestehend aus einer Trennfolie (6) und einer Bitumenschicht ohne Wurzelschutz-Additiv (9), wobei die Bitumenschicht (2) mindestens ein Wurzelschutz-Additiv umfasst, und die Trennfolie (6) im Wesentlichen zwischen der Bitumenschicht (2) und der Bitumenschicht (9) angeordnet ist, oder
iii) eine Sperrschicht (3c) darstellt umfassend mindestens ein wurzelfestes Geotextil (7) und gegebenenfalls eine Bitumenschicht ohne Wurzelschutz-Additiv (9), wobei die Bitumenschicht (2) bevorzugt mindestens ein Wurzelschutz-Additiv umfasst,
wobei das Wurzelschutz-Additiv ein organisches Wurzelschutz-Additiv ist und die Sperrschicht (3) als Oberfläche des Bitumenkomposits (1) ausgebildet ist.

2. Bitumenkomposit (1) nach Anspruch 1, **dadurch gekennzeichnet, dass** der Bitumenkomposit (1) eine Bitumenbahn (1a) oder einen auf einer Bauwerksfläche (10) angeordneten Bitumenschichtkörper (1b) darstellt.

3. Bitumenkomposit (1) nach Anspruch 1 oder 2, **dadurch gekennzeichnet, dass** die Bitumenschicht (2) mindestens ein organisches Wurzelschutz-Additiv enthält, wobei die Summe an Wurzelschutz-Additiv von 0,01 bis 3 Gew.-%, bevorzugt von 0,05 bis 1 Gew.-%, bezogen auf die Gesamtmasse des Bitumenkomposits (1) mit Wurzelschutz-Additiv, beträgt.

4. Bitumenkomposit (1) nach mindestens einem der Ansprüche 1 bis 3, **dadurch gekennzeichnet, dass** das organisches Wurzelschutz-Additiv ein Herbizid, ein Fungizid und/oder ein Biozid umfasst.

5. Bitumenkomposit (1) nach mindestens einem der Ansprüche 1 bis 4, **dadurch gekennzeichnet, dass** die Alkylgruppe des Alkoxysilans, Alkylalkoxysilans, Alkoxysiloxans, Alkylalkoxysiloxans, und/oder Alkylpolysiloxans eine C₁- bis C₁₈- Alkylgruppe, insbesondere eine C₃-bis C₁₂- Alkylgruppe, und die Alkoxygruppe eine C₁- bis C₈- Alkoxygruppe, insbesondere eine C₁- bis C₃- Alkoxygruppe, ist.

6. Bitumenkomposit (1) nach mindestens einem der Ansprüche 1 bis 5, **dadurch gekennzeichnet, dass** die Trennfolie (6) der Sperrschicht (3b) eine Metall Folie und/oder Polymer Folie umfasst, wobei die Metall Folie bevorzugt auf einer Stahl-Folie, einer Aluminium-Folie, einer Aluminium-Folie mit Glasgitter und/oder einer Aluminium- und/oder Stahlfolie mit Trägervlies basiert, und die Polymer Folie bevorzugt auf einer Folie auf Basis von Polyethylen (PE), Polypropylen (PP), PE/PP-Mischpolymerisat, Polyolefin (PO), insbesondere Thermoplastisches Polyolefin (TPO), Polyvinylchlorid (PVC), Polyamid (PA), Polyethylenterephthalat (PET) und/oder Polyacrylnitril (PAN) basiert.

7. Bitumenkomposit (1) nach mindestens einem der Ansprüche 1 bis 6, **dadurch gekennzeichnet, dass** das wurzelfeste Geotextil (7) der Sperrschicht (3c) auf mindestens einer Oberfläche der Bitumenschicht (2) angeordnet ist und, falls die Sperrschicht (3c) eine Bitumenschicht (9) umfasst, das Geotextil (7) im Wesentlichen zwischen der Bitumenschicht (2) und der Bitumenschicht (9) angeordnet ist.

8. Bitumenkomposit (1) nach mindestens einem der Ansprüche 1 bis 7, **dadurch gekennzeichnet, dass** das Geotextil (7) ein Gewebe, Vlies und/oder Verbundstoff ist und/oder auf Basis von Naturfasern wie Schilf, Jute und/oder Kokos, und/oder synthetischen Fasern wie Polypropylen, Polyamid, Polyester und/oder Polyethylen ist, wobei das Geotextil zusätzlich beschichtet und/oder thermisch behandelt sein kann.

9. Bitumenkomposit (1) nach mindestens einem der Ansprüche 1 bis 8, **dadurch gekennzeichnet, dass** die gegebenenfalls mindestens eine Verstärkungsschicht (4) innerhalb der Bitumenschicht (2), innerhalb der Sperrschicht (3) und/oder zwischen der Bitumenschicht (2) und der Sperrschicht (3) angeordnet ist.

10. Verfahren zur Herstellung des Bitumenkomposits (1) nach mindestens einem der Ansprüche 1 bis 9, **dadurch gekennzeichnet, dass**
i) die Bitumenschicht (2) und die Sperrschicht (3) miteinander in Kontakt gebracht werden, oder
ii) die Bitumenschicht (2) und das Hydrophobierungsmittel (5), die Trennfolie (6) oder das Geotextil (7) miteinander in Kontakt gebracht werden und anschliessend die Bitumenschicht (9) auf das Hydrophobierungsmittel (5), die Trennfolie (6) und/oder das Geotextil (7) angebracht wird, oder
iii) die Bitumenschicht (2) und das Hydrophobierungsmittel (5), die Trennfolie (6) oder das Geotextil (7) und die Bitumenschicht (9) so miteinander in Kontakt gebracht werden, dass das Hydrophobierungsmittel (5), die Trennfolie (6) oder das Geotextil (7) im Wesentlichen zwischen der Bitumenschicht (2) und der Bitumenschicht (9) angeordnet wird.

11. Verfahren zum Abdichten von Bauwerksflächen (10) umfassend den Bitumenkomposit (1) nach mindestens einem der Ansprüche 1 bis 9, **dadurch gekennzeichnet, dass** der Bitumenkomposit (1)
i) werkseitig hergestellt wird und so eine Bitumenbahn (1a) darstellt, wobei die Bitumenbahn (1a) in einem nachfolgenden Schritt auf eine Bauwerksfläche (10) aufgetragen wird, oder
ii) direkt auf der Bauwerksfläche (10) hergestellt wird, indem in einem ersten Schritt die Bitumenschicht (2) auf die Bauwerksfläche (10) verlegt wird und nachfolgend mindestens eine Sperrschicht (3a, 3b, 3c) umfassend das Hydrophobierungsmittel (5), die Trennfolie (6) und/oder das Geotextil (7) auf die Bitumenschicht (2) aufgetragen und anschliessend gegebenenfalls mit der Bitumenschicht (9) überdeckt wird.

12. Abgedichtete Bauwerksfläche erhältlich nach dem Verfahren gemäss Anspruch 11.

13. Verwendung des Bitumenkomposits (1) nach mindestens einem der Ansprüche 1 bis 9 und/oder hergestellt nach Anspruch 10 zum Abdichten von Bauwerksflächen (10), insbesondere von Strassen, Verkehrsflächen, Stützbauwerken, Dränanlagen, Rückhaltebecken, Erosionsschutzanlagen, Staudämmen, Tiefbauwerken, Klärteichen und Sedimentationsanlagen, Gebäudedächer, Innen- und Aussenbereichen von Tunnels, Überdachungen, insbesondere Überdachungen von Strassen und/oder Eisenbahnlinien, Brücken, Schwimmbäder, beim Küstenschutz, Deckwerksbau, Kanalbau, Tunnelbau, Deponiebau, Oberflächenerosionsschutz, Asphaltoberbau, Verkehrswegebau, Eisenbahnbau, Erd- und/oder Grundbau.

14. Verwendung nach Anspruch 13, **dadurch gekennzeichnet, dass** die Bauwerksflächen (10) Beton, Metall, Stahl, Stahlblech und/oder Holz umfassen und/oder dass die abgedichteten Bauwerksflächen, insbesondere Gebäudedächer, begrünt werden.

15. Verwendung der abgedichteten Bauwerksfläche nach Anspruch 12 und/oder hergestellt nach Anspruch 11 bei Strassen, Verkehrsflächen, Stützbauwerken, Dränanlagen, Rückhaltebecken, Erosionsschutzanlagen, Staudämmen, Tiefbauwerken, Klärteichen und Sedimentationsanlagen, Gebäudedächer, Innen- und Aussenbereiche von Tunnels, Überdachungen, insbesondere Überdachungen von Strassen und/oder Eisenbahnlinien, bei Brücken, Schwimmbäder, beim Küstenschutz, Deckwerksbau, Kanalbau, Tunnelbau, Deponiebau, Oberflächenerosionsschutz, Asphaltoberbau, Verkehrswegebau, Eisenbahnbau, Erd- und/oder Grundbau.

## Claims

1. Bitumen composite (1) with protection against plant roots, comprising a lower bitumen layer (2), an upper barrier layer (3) and, where applicable, a reinforcement layer (4) arranged within the bitumen layer (2), **characterized in that** the barrier layer (3)
i) is a barrier layer (3a) comprising at least one hydrophobic agent (5) and, where applicable, a bitumen layer without a root-protection additive (9), wherein the bitumen layer (2) comprises at least one root-protection additive, wherein the hydrophobic agent (5) of the barrier layer (3a) is an alkoxysilane, alkylalkoxysilane, alkoxysiloxane, alkylalkoxysiloxane, alkylpolysiloxane, silicone resin and/or alkali siliconeate,
ii) is a barrier layer (3b) consisting of a separating foil (6) and a bitumen layer without a root-protection additive (9), wherein the bitumen layer (2) comprises at least one root-protection additive, and the separating foil (6) is essentially arranged between bitumen layer (2) and bitumen layer (9), or
iii) is a barrier layer (3c) comprising at least one root-resistant geotextile (7) and, where applicable, a bitumen layer without a root-protection additive (9), wherein the bitumen layer (2) preferably comprises at least one root-protection additive,
wherein the root-protection additive is an organic root-protection additive, and the barrier layer (3) is formed as the surface of the bitumen composite (1).

2. Bitumen composite (1) according to Claim 1, **characterized in that** the bitumen composite (1) is a bituminous sheeting (1a) or a bitumen-layer body (1b) arranged on a structural surface (10).

3. Bitumen composite (1) according to Claim 1 or 2, **characterized in that** the bitumen layer (2) contains at least one organic root-protection additive, wherein the sum of root-protection additive is from 0.01 to 3% by weight, preferably from 0.05 to 1% by weight, based on the total mass of the bitumen composite (1) with root-protection additive.

4. Bitumen composite (1) according to at least one of the Claims 1 to 3, **characterized in that** the organic root-protection additive comprises a herbicide, a fungicide and/or a biocide.

5. Bitumen composite (1) according to at least one of the Claims 1 to 4, **characterized in that** the alkyl group of alkoxysilane, alkylalkoxysilane, alkoxysiloxanes, alkylalkoxysiloxanes, and/or alkylpolysiloxane is a C₁ to C₁₈ alkyl group, in particular, a C₃ to C₁₂ alkyl group, and the alkoxy group a C₁ to C₈ alkoxy group, in particular, a C₁ to C₃ alkoxy group.

6. Bitumen composite (1) according to at least one of the Claims 1 to 5, **characterized in that** the separating foil (6) of the barrier layer (3b) comprises a metal foil and/or polymer foil, wherein the metal foil is preferably based on a steel foil, an aluminium foil, an aluminium foil with a glass grid and/or an aluminium and/or steel foil with carrier fleece, and the polymer film preferably on a film based on polyethylene (PE), polypropylene (PP), PE/PP copolymer, polyolefin (PO), in particular, thermoplastic polyolefin (TPO), polyvinyl chloride (PVC), polyamide (PA), polyethylene terephthalate (PET) and/or polyacrylonitrile (PAN).

7. Bitumen composite (1) according to at least one of the Claims 1 to 6, **characterized in that** the root-resistant geotextile (7) of the barrier layer (3c) is arranged on at least one surface of the bitumen layer (2) and, if the barrier layer (3c) comprises a bitumen layer (9), the geotextile (7) is essentially arranged between bitumen layer (2) and bitumen layer (9).

8. Bitumen composite (1) according to at least one of the Claims 1 to 7, **characterized in that** the geotextile (7) is a fabric, non-woven material and/or composite and/or based on natural fibres, such as reed, jute and/or coconut, and/or synthetic fibres, such as polypropylene, polyamide, polyester and/or polyethylene, wherein the geotextile can additionally be coated and/or thermally treated.

9. Bitumen composite (1) according to at least one of the Claims 1 to 8, **characterized in that**, where applicable, the at least one reinforcement layer (4) is arranged within the bitumen layer (2), within the barrier layer (3) and/or between the bitumen layer (2) and the barrier layer (3).

10. Method for preparing the bitumen composite (1) according to at least one of the Claims 1 to 9, **characterized in that**
i) the bitumen layer (2) and the barrier layer (3) are brought into contact with each other, or
ii) the bitumen layer (2) and the hydrophobic agent (5), the separating foil (6) or the geotextile (7) are brought into contact with each other, and then the bitumen layer (9) is applied to the hydrophobic agent (5), the separating foil (6) and/or the geotextile (7), or
iii) the bitumen layer (2) and the hydrophobic agent (5), the separating foil (6) or the geotextile (7) and the bitumen layer (9) are brought into contact with each other in such a way that the hydrophobic agent (5), the separating foil (6) or the geotextile (7) is essentially arranged between bitumen layer (2) and bitumen layer (9).

11. Method for sealing structural surfaces (10) comprising the bitumen composite (1) according to at least one of the Claims 1 to 9, **characterized in that** the bitumen composite (1)
i) is manufactured at the factory and thus represents a bituminous sheeting (1a), wherein the bituminous sheeting (1a) is applied to a structural surface (10) in a subsequent step, or
ii) is produced directly on the structural surface (10) by laying the bitumen layer (2) on the structural surface (10) in a first step and then applying at least one barrier layer (3a, 3b, 3c) comprising the hydrophobic agent (5), the separating foil (6) and/or the geotextile (7) to the bitumen layer (2) and then, where applicable, covering it with the bitumen layer (9).

12. Sealed structural surface obtainable according to the method according to Claim 11.

13. Use of the bitumen composite (1) according to at least one of the Claims 1 to 9 and/or produced according to Claim 10 for sealing structural surfaces (10), in particular, roads, traffic areas, supporting structures, drainage systems, retention basins, erosion protection systems, dams, civil engineering works, sewage ponds and sedimentation plants, building roofs, interior and exterior areas of tunnels, roofing structures, in particular, the roofing structures of roads and/or railway lines, bridges, swimming pools, for coastal protection, revetment construction, canal construction, tunnel construction, landfill construction, surface-erosion protection, asphalt superstructures, traffic-route construction, railway construction, earthworks and/or foundation construction.

14. Use according to Claim 13, **characterized in that** the structural surfaces (10) comprise concrete, metal, steel, steel sheet and/or wood, and/or that the sealed structural surfaces, in particular, building roofs, are greened.

15. Use of the sealed structural surface according to Claim 12 and/or produced according to Claim 11 for roads, traffic areas, support structures, drainage systems, retention basins, erosion-protection systems, dams, civil engineering, sewage ponds and sedimentation plants, building roofs, interior and exterior areas of tunnels, roofing structures, in particular, roofing structures of roads and/or railway lines, for bridges, swimming pools, in coastal protection, revetment construction, canal construction, tunnel construction, landfill construction, surface-erosion protection, asphalt superstructures, traffic-route construction, railway construction, earthworks and/or foundation construction.

## Revendications

1. Composite bitumeux (1), pourvu d'une protection contre les racines végétales, comprenant une couche bitumeuse (2) inférieure, une couche barrière (3) supérieure, et éventuellement une couche de renfort (4) placée à l'intérieur de la couche bitumeuse (2), **caractérisé en ce que** la couche barrière (3)
i) constitue une couche barrière (3a) comprenant au moins un agent hydrophobisant (5) et le cas échéant, une couche bitumeuse exempte d'additif de protection antiracines (9), la couche bitumeuse (2) comprenant au moins un additif de protection antiracines, l'agent hydrophobisant (5) de la couche barrière (3a) étant constitué d'un alcoxysilane, d'un alkylalcoxysilane, d'un alcoxysiloxane, d'un alkylalcoxysiloxane, d'un alkylpolysiloxane, d'une résine de silicone et/ou d'un siliconate alcalin,
ii) constitue une couche barrière (3b) consistant en un film séparateur (6) et en une couche bitumeuse exempte d'additif de protection antiracines (9), la couche bitumeuse (2) comprenant au moins un additif de protection antiracines et le film séparateur (6) étant majoritairement placé entre la couche bitumeuse (2) et la couche bitumeuse (9), ou
iii) constitue une couche barrière (3c) comprenant au moins un géotextile (7) résistant aux racines et le cas échéant une couche bitumeuse exempte d'additif de protection antiracines (9), la couche bitumeuse (2) comprenant de préférence au moins un additif de protection antiracines,
l'additif de protection antiracines étant un additif de protection antiracines organique et la couche barrière (3) étant conçue sous la forme de surface du composite bitumeux (1).

2. Composite bitumeux (1) selon la revendication 1, **caractérisé en ce que** le composite bitumeux (1) constitue une bande de bitume (1a) ou un corps bitumeux stratifié (1b) placé sur une surface d'ouvrage du bâtiment (10).

3. Composite bitumeux (1) selon la revendication 1 ou 2, **caractérisé en ce que** la couche bitumeuse (2) contient au moins un additif de protection antiracines organique, la somme de l'additif de protection antiracines s'élevant à de 0,01 à 3 % en poids, de préférence, à de 0,05 à 1 % en poids, rapportés à la masse totale du composite bitumeux (1) avec additif de protection antiracines.

4. Composite bitumeux (1) selon au moins l'une quelconque des revendications 1 à 3, **caractérisé en ce que** l'additif de protection antiracines organique comprend un agent herbicide, un agent fongicide et/ou un agent biocide.

5. Composite bitumeux (1) selon au moins l'une quelconque des revendications 1 à 4, **caractérisé en ce que** le groupe alkyle de l'alcoxysilane, de l'alkylalcoxysilane, de l'alcoxysiloxane, de l'alkylalcoxysiloxane, et/ou de l'alkylpolysiloxane est un groupe alkyle en C₁ à C₁₈, notamment un groupe alkyle en C₃ à C₁₂, et le groupe alcoxy est un groupe alcoxy en C₁ à C₈, notamment un groupe alcoxy en C₁ à C₃.

6. Composite bitumeux (1) selon au moins l'une quelconque des revendications 1 à 5, **caractérisé en ce que** le film séparateur (6) de la couche barrière (3b) comprend un film métallique et/ou un film polymère, le film métallique étant basé de préférence sur un film d'acier, un film d'aluminium, un film d'aluminium pourvu d'un treillis de verre et/ou un film d'aluminium et/ou film d'acier pourvu d'un non-tissé de support et le film polymère étant basé de préférence sur un film à base de polyéthylène (PE), de polypropylène (PP), d'un polymère mixte PE/PP, d'une polyoléfine (PO), notamment d'une polyoléfine thermoplastique (TPO), d'un polychlorure de vinyle (PVC), d'un polyamide (PA), d'un poly(téréphtalate d'éthylène) (PET) et/ou d'un polyacrylonitrile (PAN).

7. Composite bitumeux (1) selon au moins l'une quelconque des revendications 1 à 6, **caractérisé en ce que** le géotextile (7) résistant aux racines de la couche barrière (3c) est placé sur au moins une surface de la couche bitumeuse (2) et, si la couche barrière (3c) comprend une couche bitumeuse (9), le géotextile (7) est majoritairement placé entre la couche bitumeuse (2) et la couche bitumeuse (9).

8. Composite bitumeux (1) selon au moins l'une quelconque des revendications 1 à 7, **caractérisé en ce que** le géotextile (7) est un tissu, un non-tissé et/ou une matière composite et/ou est à base de fibres naturelles, comme le roseau, la jute et/ou la noix de coco et/ou de fibres synthétiques, comme le polypropylène, le polyamide, le polyester et/ou le polyéthylène, le géotextile pouvant être additionnellement enduit et/ou traité thermiquement.

9. Composite bitumeux (1) selon au moins l'une quelconque des revendications 1 à 8, **caractérisé en ce que** l'éventuelle au moins une couche de renfort (4) est placée à l'intérieur de la couche bitumeuse (2), à l'intérieur de la couche barrière (3) et/ou entre la couche bitumeuse (2) et la couche barrière (3).

10. Procédé, destiné à produire le composite bitumeux (1) selon au moins l'une quelconque des revendications 1 à 9, **caractérisé en ce que**
i) l'on amène on contact mutuel la couche bitumeuse (2) et la couche barrière (3), ou
ii) l'on amène on contact mutuel la couche bitumeuse (2) et l'agent hydrophobisant (5), le film séparateur (6) ou le géotextile (7) et l'on pose ensuite la couche bitumeuse (9) sur l'agent hydrophobisant (5), le film séparateur (6) et/ou le géotextile (7), ou
iii) l'on amène on contact mutuel la couche bitumeuse (2) et l'agent hydrophobisant (5), le film séparateur (6) ou le géotextile (7) et la couche bitumeuse (9) de sorte à placer majoritairement l'agent hydrophobisant (5), le film séparateur (6) ou le géotextile (7) entre la couche bitumeuse (2) et la couche bitumeuse (9).

11. Procédé, destiné à assurer l'étanchéité de surfaces d'ouvrages du bâtiment (10), comprenant le composite bitumeux (1) selon au moins l'une quelconque des revendications 1 à 9, **caractérisé en ce que** le composite bitumeux (1)
i) est produit en usine et constitue ainsi une bande de bitume (1a), dans une étape suivante, la bande de bitume (la) étant appliquée sur une surface d'ouvrage du bâtiment (10), ou
ii) est produit directement sur la surface d'ouvrage du bâtiment (10), **en ce que** dans une première étape, la couche bitumeuse (2) est posée sur la surface d'ouvrage du bâtiment (10) et ensuite au moins une couche barrière (3a, 3b, 3c) comprenant l'agent hydrophobisant (5), le film séparateur (6) et/ou le géotextile (7) est appliquée sur la couche bitumeuse (2) et recouverte éventuellement par la suite avec la couche bitumeuse (9).

12. Surface d'ouvrage du bâtiment étanchéifiée, susceptible d'être obtenue d'après le procédé selon la revendication 11.

13. Utilisation du composite bitumeux (1) selon au moins l'une quelconque des revendications 1 à 9 et/ou produit selon la revendication 10, pour assurer l'étanchéité de surfaces d'ouvrages du bâtiment (10), notamment de routes, d'aires de circulation, d'ouvrages de soutènement, de systèmes de drainage, de bassins de rétention, d'installations de protection contre l'érosion, de barrages, d'ouvrages du génie civil, de bassins de traitement des eaux usées et de systèmes de sédimentation, de toits de bâtiments, de zones intérieures et extérieures de tunnels, d'auvents, notamment d'auvents de routes et/ou de lignes ferroviaires, de ponts, de piscines, dans le domaine de la protection côtière, du revêtement de berges, de la construction de canaux, de la construction de tunnels, de la construction de décharges, de la protection contre l'érosion des surfaces, des superstructures en asphalte, de la construction de voies de circulation, de la construction ferroviaire, du terrassement et/ou des travaux de fondation.

14. Utilisation selon la revendication 13, **caractérisée en ce que** les surface d'ouvrages du bâtiment (10) comprennent du béton, du métal, de l'acier, de la tôle d'acier et/ou du bois et/ou **en ce que** l'on végétalise les surfaces d'ouvrage du bâtiment étanchéifiées, notamment les toits de bâtiments.

15. Utilisation de la surface d'ouvrage du bâtiment selon la revendication 12 et/ou produite selon la revendication 11 pour des routes, des aires de circulation, des ouvrages de soutènement, des systèmes de drainage, des bassins de rétention, des installations de protection contre l'érosion, des barrages, des ouvrages du génie civil, des bassins de traitement des eaux usées et des système de sédimentation, des toits de bâtiments, des zones intérieures et extérieures de tunnels, des auvents, notamment des auvents de routes et/ou de lignes ferroviaires, pour des ponts, des piscines, dans le domaine de la protection côtière, du revêtement de berges, de la construction de canaux, de la construction de tunnels, de la construction de décharges, de la protection contre l'érosion des surfaces, des superstructures en asphalte, de la construction de voies de circulation, de la construction ferroviaire, du terrassement et/ou des travaux de fondation.
